# EUROPEAN PATENT APPLICATION

(11) **EP 2 937 678 A1**
(43) Date of publication of application: **28.10.2015**
(21) Application number: 13865615.2
(22) Date of filing: 10.12.2013
(51) Int. Cl.: G01L 5/00, F16C 41/00, G01L 5/16, G01L 5/20

(54) **SENSOR-EQUIPPED WHEEL BEARING DEVICE**

(30) Priority: 18.12.2012 JP 2012275631
(71) Applicant: NTN Corporation, Osaka-shi, Osaka 550-0003 (JP)
(72) Inventor: HATAKEYAMA, Wataru, Iwata-shi Shizuoka 438-0037 (JP); TAKAHASHI, Toru, Iwata-shi Shizuoka 438-0037 (JP); NISHIKAWA, Kentarou, Iwata-shi Shizuoka 438-0037 (JP)
(74) Representative: Bugnion Genève
(86) International application number: PCT/JP2013/083039
(87) International publication number: WO 2014/097926

(57) **Abstract**

A sensor-equipped wheel support bearing assembly is provided which performs high-accuracy load estimation without providing with another sensor, even in a state where a ground contact load on a wheel supported by the bearing is very low as compared to other wheels. The assembly includes: a plurality of sensor units (20) detecting a load on a wheel support bearing segment (100); sensor signal calculator (31) processing sensor signals (S) from the units; and load calculation processor (32) calculating a load on a road surface contact point on a wheel, based on the processed information. The processor (32) determines whether a target wheel is in a predetermined low load state, based on information of a detected load on a wheel other than the target wheel; and switches a load calculation scheme in accordance with a result of the determination to calculate a load on the wheel.

## Description

### CROSS REFERENCE TO THE RELATED APPLICATION

This application is based on and claims Convention priority to Japanese patent application No. 2012-275631, filed December 18, 2012, the entire disclosure of which is herein incorporated by reference as a part of this application.

### BACKGROUND OF THE INVENTION

### (Field of the Invention)

The present invention relates to a sensor-equipped wheel support bearing assembly having a function of detecting a load acting on a bearing in a wheel, and specifically, to a sensor-equipped wheel support bearing assembly which performs an estimation calculation process of calculating a ground contact load acting on a wheel which is a target, by using sensor signals for a plurality of wheels.

### (Description of Related Art)

In order to determine a load acting on a wheel of an automotive vehicle, a sensor-equipped wheel support bearing assembly has been proposed, which includes a strain gauge affixed on an outer diameter surface of an outer ring of the bearing assembly to sense strain in the outer diameter surface of the outer ring, so that a load can be determined based on the detected strain (e.g., Patent Document 1). A sensor-equipped wheel support bearing assembly has also been proposed which includes a strain generation member mounted on the wheel support bearing to increase and transfer a strain occurring in the wheel support bearing and detects a load by detecting the strain (e.g., Patent Document 2).

In addition to the above, a configuration in which the direction of an axial load Fy is determined on the basis of a difference in amplitude value (vibration component attributable to revolution of rolling elements) between signals from sensors disposed above and below a wheel support bearing, and a load is calculated on the basis of a load estimation parameter which depends on the positive/negative of the axial load (the direction of the axial load) Fy has been proposed (Patent Document 3). Also, a load calculation scheme using an average value and amplitude have been proposed (Patent Document 4).

### [Prior Art Document]

### [Patent Document]

[Patent Document 1] JP Published Int'l Application No. 2003-530565
[Patent Document 2] JP Laid-open Patent Publication No. 2009-270711
[Patent Document 3] JP Laid-open Patent Publication No. 2010-43901
[Patent Document 4] JP Laid-open Patent Publication No. 2010-96565

### SUMMARY OF THE INVENTION

In the above conventional sensor-equipped wheel support bearing assemblies, under a running condition such as the condition that wheels are turning, a ground contact load acting on the wheel at an inner side of turning can significantly decrease, and thus, the signal level of the sensor may decrease. As a result, a load may not be estimated normally. In addition, in the conventional configuration, since the load calculation process is performed independently at each wheel, it is difficult to determine the state where a ground contact load has decreased, only from the sensor signals. Thus, a load may not be estimated accurately due to influence of the above phenomenon. A system which uses a load output for vehicle control cannot achieve desirable control if the load output is not accurate.

Therefore, a method is required in which a state where the ground contact load is low can be detected and an accurate load value corresponding to the state can be estimated.

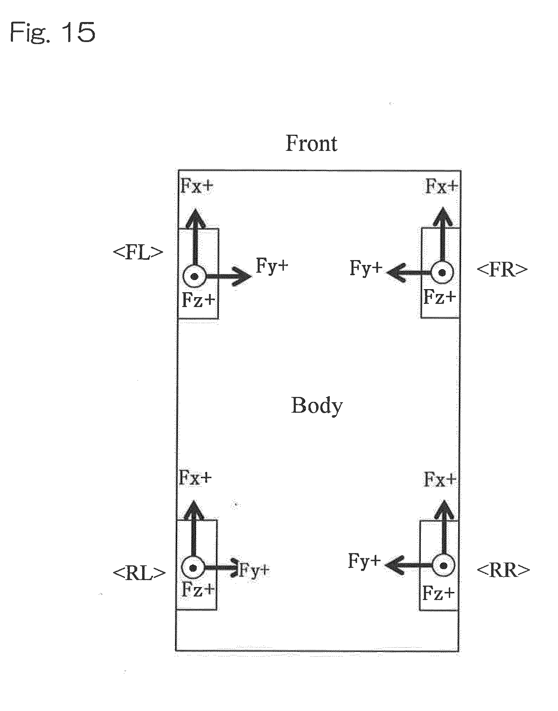

This problem to be solved will be described with reference to Figs. 15 to 17. As shown in Fig. 15, a load applied to a road surface contact point on each wheel of a vehicle is defined. In particular, a load in a traveling direction of the vehicle which acts on each wheel is represented as Fx, a ground contact load which is a vertical load acting on each wheel is represented as Fz, and an axial load acting on each wheel is represented as Fy. Regarding the direction of positive/negative, the forward in the traveling direction is defined as + (plus), the upward in the vertical direction is defined as +, and, for the axial direction, the center side in the width direction of the vehicle is defined as +. A state where the ground contact load Fz has greatly decreased with respect to a load acting on the wheel in a normal state is referred to as an "Fz low applied load state". The reference characters FL, FR, RL and RR in the drawings denote a front left wheel, a front right wheel, a rear left wheel and a rear right wheel, respectively. The definitions regarding the loads and regarding the the wheels are used throughout the specification.

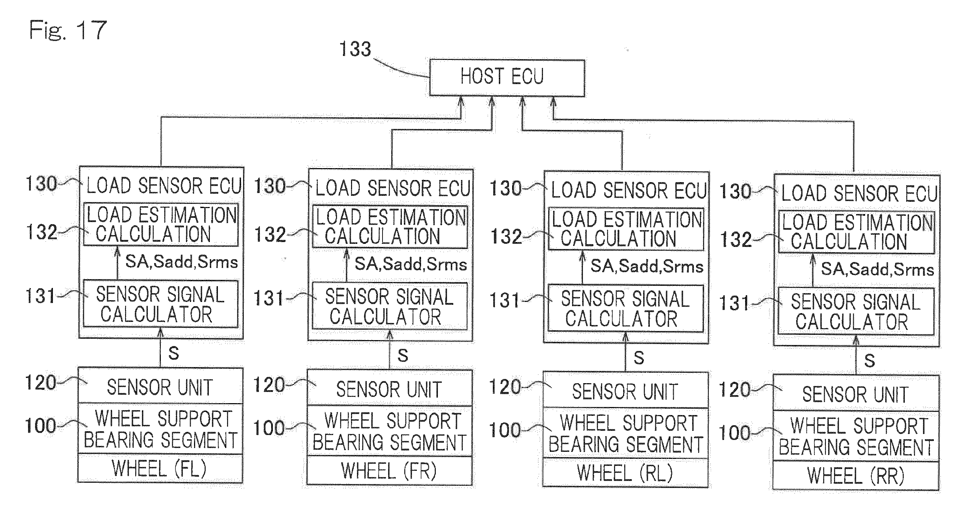

Fig. 17 shows an example of conventional sensor ECUs 130. To a sensor signal calculator 131, sensor signals S such as strain detection values outputted from sensor units 120 which are provided at a plurality of locations on a wheel support bearing are inputted. The sensor signal calculator 131 generates information (SA, Sadd, Srms) which has been subjected to a process such as an averaging process or a summing or substraction process, so that the signal is supplied to a load estimation calculator 132 for a wheel. The load estimation calculator 132 estimates loads (Fx, Fy, Fz) in the above three axis directions which act on the wheel based on the information to output the loads to a host ECU 133 which performs vehicle control. To the load sensor ECUs 130 for the respective wheels FL, FR, RL, and RR, sensor signals S from the corresponding wheel is inputted.

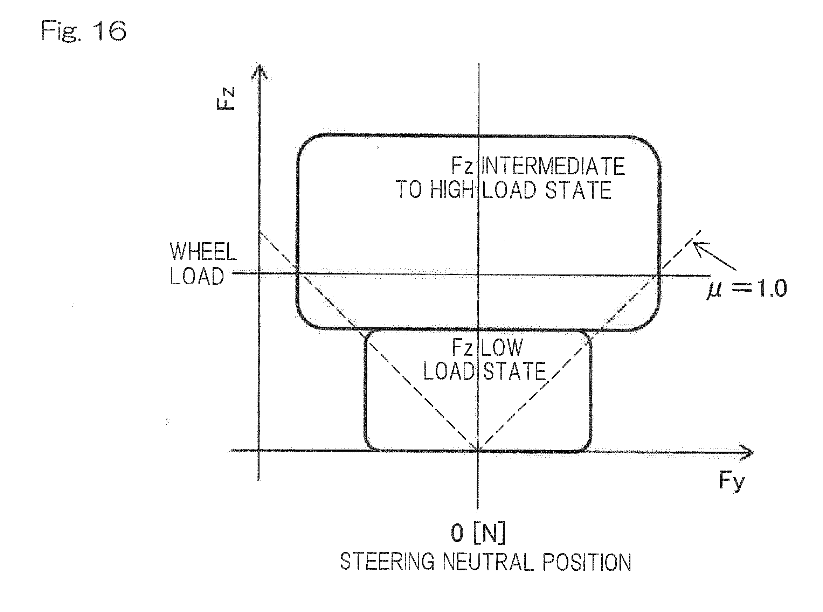

Fig. 16 shows a relationship between an axial load Fy and a ground contact load Fz applied to a wheel. In a sensor which detects a load by detecting a strain occurring in a wheel support bearing, when a load applied to the bearing is low, causing a state where almost no strain occurs, a signal level decreases and it is made difficult to separate the axial load Fy and the vertical load Fz. Under the Fz low applied load state as described above, since the ground contact load Fz is low, an axial load Fy (lateral force) becomes also low, that is, in Fig. 16 the axial load Fy is positioned at the center side with respect to a broken line with a frictional coefficient µ = 1.0. As a result, the loads applied in both directions are reduced. When applied loads are reduced, a relationship between the loads and a bearing deformation amount becomes nonlinear, so that the sensitivity of a sensor signal with respect to a load decreases. Thus, if the same load calculation scheme as when the ground contact load Fz is sufficiently applied is used, the accuracy of load estimation deteriorates.

A system for vehicle control using an inexact load value cannot achieve desirable control, which is undesirable. Thus, it is necessary to use a load estimation scheme in which the Fz low applied load state can be detected and an appropriate calculation process is performed accordingly.

An object of the present invention is to provide a sensor-equipped wheel support bearing assembly which is able to perform high-accuracy load estimation without providing with another sensor, even in a state where a ground contact load or the like acting on a wheel supported by the wheel support bearing device is very low as compared to other wheels, for example, in the case where the wheel is on the point of being lifted off a road surface.

Hereinafter, for convenience of easy understanding, a description will be given with reference to the reference numerals in embodiments.

A sensor-equipped wheel support bearing assembly of the present invention includes: a wheel support bearing segment 100 for rotatably supporting a vehicle wheel relative to a vehicle body structure, the bearing segment including: an outer member 1 having an inner periphery formed with a plurality of rows of raceway surfaces; an inner member 2 having an outer periphery formed with raceway surfaces that faces the respective raceway surfaces in the outer member; and a plurality of rows of rolling elements 5 interposed between the facing raceway surfaces of the outer member 1 and the inner member 2; a plurality of sensor units 20 provided in the wheel support bearing segment 100, each sensor unit 20 being configured to detect a load applied to the wheel support bearing segment 100; a sensor signal calculator 31 configured to process an output signals from the plurality of sensor units 20 to generate an input signal vector; and a load calculation processor 32 configured to calculate a load applied to a road surface contact point on the wheel supported by the wheel support bearing segment 100, on the basis of the input signal vector generated by the sensor signal calculator 31. The load calculation processor 32 includes: a low load state determination section 32b configured to determine whether a target wheel which is the wheel supported by the wheel support bearing segment 100 is in a predetermined low load state, based on information of a detected load acting on at least one or more wheels which is provided in the same vehicle as the target wheel, but other than the target wheel; and a load estimation calculation section 32a configured to switch a load calculation scheme in accordance with a result of the determination by the low load state determination section 32b and to calculate the load applied to the road surface contact point on the wheel, based on the input signal vector. Each of the sensor units 20 is not limited to one which directly detects a load applied to the bearing segment 100, but may be one which is able to detect a physical amount from which a load can be detected, such as strain generated on the bearing segment 100. The "predetermined low load state" is a low load state determined as appropriate.

According to this configuration, since the information of the detected load on the wheel other than the target wheel is used, it is possible to accurately determine whether the target wheel is in the low load state, for example, in a state where the load acting thereon is very low as compared to another wheel, or in a state where the target wheel is on the point of being lifted off from a road surface. In addition, since the information of the detected load on another wheel, for example, information of a detected load in a sensor-equipped wheel support bearing assembly for another wheel is used, it is unnecessary to provide with an additional sensor for determining a low load state.

In a process of estimating a load applied to a wheel when the wheel is in the low load state, if calculation is performed by the same load calculation scheme as that at a normal time, the estimation cannot be performed accurately. According to the configuration above, when it is determined that the low load state has occurred, the load estimation calculation section 32a switches the load calculation scheme to calculate a load applied to the wheel. Thus, even in the low load state, a high-accuracy load estimation process can be performed.

A use mode example in the case where the sensor-equipped wheel support bearing assembly is provided to each of the wheels of the vehicle will be described. Based on detected loads on a plurality of wheels, each sensor-equipped wheel support bearing assembly determines whether the load acting on each wheel is in a low load state. In particular, an estimation load detected at each wheel is inputted to the low load state determination section 32b in the load calculation processor 32 for another wheel, and the low load state determination section 32b estimates whether a load such as a ground contact load Fz on the target wheel is in a low load state, by using a plurality of the obtained load values. For the wheel that is estimated to be in the low load state, the scheme of calculating a load by the load estimation calculation section 32a is switched to the scheme suitable for the low load state, so that an estimation load with a smaller error can be calculated.

As described above, the sensor-equipped wheel support bearing assembly is able to perform high-accuracy load estimation without providing with an additional sensor, even in a state where the ground contact load acting on the wheel supported by the wheel support bearing segment is very low as compared to other wheels, for example, in the case where the wheel is on the point of being lifted off a road surface.

The determination as to the predetermined low load state region by the low load state determination section 32b may be performed on the basis of a determination as to whether a ground contact load Fz acting on the target wheel is within a predetermined low load state region. The load acting on the wheel includes an axial load Fy and a load Fx in a traveling direction in addition to the ground contact load Fz, but the axial load Fy is important to know a low load state for accurate load estimation.

The low load state determination section 32b may be provided in a load sensor ECU 30 including an electric control unit, or may be provided in a host ECU 33 including an electric control unit, which is a host side with respect to the load sensor ECU 30 and may be configured to transmit the result of the determination to the load sensor ECU 30.

The switching of the load calculation scheme in accordance with the result of the determination in the load estimation calculation section 32a may include switching of a load estimation coefficient. In this case, load calculation using a load estimation coefficient optimized according to the characteristics of the low load state is enabled, and thus the accuracy of load estimation improves.

Alternatively, the switching of the load calculation scheme in accordance with the result of the determination in the load estimation calculation section 32a may include switching of an input configuration of the input signal vector (SA, Sadd, Srms) (a configuration of a signal vector) to be used for a load calculation process. The switching of the input configuration of the signal vector may include switching of the number or the type of elements of the signal vector to be inputted. By switching to the load calculation scheme in which the number or the type of elements of the signal vector to be inputted is optimized, it is possible to perform optimum load estimation calculation for the low load state of the acting load such as a ground contact load, and thus it is possible to improve the accuracy of load estimation.

The low load state determination section 32b may determine whether the target wheel is in the predetermined low load state, by using information of calculated loads on a wheel at a laterally opposite side of the vehicle with respect to the target wheel (hereinafter, sometimes referred to merely as "opposite wheel"), a wheel at a diagonally opposite position with respect to the target wheel (hereinafter, sometimes referred to merely as "diagonal wheel"), or both the wheel at the laterally opposite side and the wheel at the diagonally opposite position.

For example, with respect to a front left target wheel, the opposite and diagonal wheels are front right and rear right wheels, respectively. The low load state is determined by using a load output for such an opposite wheel or diagonal wheel or by using a combination of the load outputs of these two wheels.

In this case, the low load state determination section 32b may use, as an evaluation value for performing the determination, a ground contact load Fz acting on the wheel support bearing segment 100, an axial load Fy acting on the wheel support bearing segment 100, or a value which is a combination of the ground contact load Fz and the axial load Fy. Each example in this case will be described.
(1) Example of a method using a load output for the opposite wheel or the diagonal wheel:
   Either one of or both the axial load Fy and the ground contact load Fz on the opposite wheel or the diagonal wheel are used as an indicator or parameter, and each load is compared to a corresponding preset threshold. When the load exceeds the threshold, it is determined that the ground contact load acting on the determination target wheel is in the low load state.
(2) Example of a method using load outputs for both the opposite wheel and the diagonal wheel:
   The axial load Fy and the ground contact load Fz on the opposite wheel and the axial load Fy and the ground contact load Fz on the diagonal wheel are used as indicators or parameters. When both of the load exceed the respective preset thresholds, it is determined that the ground contact load acting on the determination target wheel is in the low load state.
(3) Example of performing the determination by using the ground contact load Fz and the axial load Fy on the diagonal wheel and the determination target wheel:
   When two loads, the axial load Fy and the ground contact load Fz on the diagonal wheel, are used as indicators or parameters and points on an Fy-Fz plane which are determined by the two load values are in a preset region, it is determined that the ground contact load acting on the determination target wheel is in the low load state.

When, on an Fy-Fz plane with Fy and Fz indicating an axial load and a ground contact load, respectively, two points on the plane for the axial loads Fy and the ground contact loads Fz applied to two diagonal wheels deviate from point-symmetrical positions by a given amount with respect to an origin, at which the axial load Fy is equal to a load at a steering neutral position and the ground contact load Fz is equal to a wheel load, the low load state determination section 32b may determine that a wheel having a ground contact load Fz lower than the wheel load is in the low load state. Thus, the determination of the low load state can be performed further accurately. The "wheel load" refers to a load in the vertical direction on a wheel, which load affects a horizontal straight track, when the vehicle is stationary on the track.

The low load state determination section 32b may switch a threshold serving as a reference for the determination between at ON of a brake and at OFF of the brake based on brake information of the vehicle, and may perform the determination as to the predetermined low load state.

In the case of the configuration which takes into consideration influence of the brake on the determination process as described above, the accuracy of the determination of the low load state further improves.

The brake information may be obtained based on a result of a determination as to ON/OFF by using a result of the calculation by the load estimation calculation section 32a, or may be information acquired from a host ECU 33 that performs integrated control of the vehicle.

The low load state determination section 32b may include a compensation processing section 32c for considering different wheels of the vehicle as being under an equal condition. The compensation processing section 32c may correct values of the axial load Fy and the ground contact load Fz on the wheel support bearing segment 100. In addition, the compensation processing section 32c may include a corrected value storage section 32d configured to store a parameter to be used for performing the compensation. The compensation processing section 32c may compensate a difference in mounting angle of a wheel of the vehicle. The compensation processing section 32c may compensate a difference in geometry of a suspension at wheels of the vehicle.

Since the low load state determination section 32b may be provided with the compensation processing section configured to compensate influence of a difference in mounting angle (toe angle) or suspension shape between the front and rear wheels on the load outputs, even if the surrounding environments of the wheels are different from each other, the difference therebetween is compensated and the environments can be considered as being equivalent. Thus, it is possible to handle various conditions without using special hardware, the cost is reduced, and the convenience improves.

A sensor-equipped wheel support bearing system of the present invention includes: a plurality of wheel support bearing segments 100; a plurality of sensor units 20 provided in each of at least two wheel support bearing segments of the plurality of wheel support bearing segments 100, each sensor unit 20 being configured to detect a load applied to the corresponding wheel support bearing segment 100; at least one sensor signal calculator 31; and at least one load calculation processor 32.

Each of the plurality of wheel support bearing segments 100 for rotatably supporting a vehicle wheel relative to a vehicle body structure includes: an outer member 1 having an inner periphery formed with a plurality of rows of raceway surfaces; an inner member 2 having an outer periphery formed with raceway surfaces that faces the respective raceway surfaces in the outer member; and a plurality of rows of rolling elements 5 interposed between the facing raceway surfaces of the outer member 1 and the inner member 2.

The at least one sensor signal calculator 31 processes output signals from the plurality of sensor units 20 provided in the at least two wheel support bearing segments 100, to generate input signal vectors.

The load calculation processor 32 calculates loads applied to road surface contact points on the wheels supported by the respective at least two wheel support bearing segments 100, based on the input signal vectors, and includes: a low load state determination section 32b configured to, for the target wheel on which the load is calculated, determine whether the target wheel is in a predetermined low load state, based on information of a calculated load acting on a wheel other than the target wheel; and a load estimation calculation section 32a configured to switch a load calculation scheme in accordance with a result of the determination by the low load state determination section 32b to calculate the load applied to the road surface contact point on the wheel, based on the input signal vector.

According to the sensor-equipped wheel support bearing system having this configuration, the one load calculation processor 32 calculates the load applied to the road surface contact point on the target wheel, and the low load state determination section 32b determines whether the wheel is in the low load state. Then, similarly to the description regarding the sensor-equipped wheel support bearing assembly described above, the load calculation scheme is switched in accordance with the result of the determination as to the Fz low applied load state, and the load applied to the road surface contact point on the wheel is calculated. Thus, similarly to the above, high-accuracy load estimation can be performed without providing another sensor, even in a state where the ground contact load or the like acting on the supported wheel is very low as compared to other wheels, for example, in the case where the wheel is on the point of being lifted off a road surface.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 shows, in combination, a cross-sectional view of a bearing of a sensor-equipped wheel support bearing assembly according to a first embodiment of the present invention and a block diagram illustrating a conceptual configuration of a detection system of the assembly;
Fig. 2 shows a front elevational view of an outer member of the bearing segment, as viewed from an outboard side;
Fig. 3 shows a top view of a sensor unit of the sensor-equipped wheel support bearing assembly on an enlarged scale;
Fig. 4 shows a cross section of Fig. 3 cut along the line IV-IV;
Fig. 5 shows a block diagram illustrating an example of a configuration of the detection system;
Fig. 6 shows a block diagram of a load estimation calculation section of the detection system;
Fig. 7 illustrates a scheme of determining an Fz low applied load state by a low load state determination section based on a load output from an opposite wheel;
Fig. 8 illustrates the positions of points representing loads Fy and Fz on a determination target wheel and a diagonal wheel;
Fig. 9 shows a block diagram of a load sensor ECU configured to use a brake signal in the low load state determination section;
Fig. 10 shows a block diagram of a load sensor ECU including a compensation processing section;
Fig. 11 shows a block diagram of the compensation processing section provided with a corrected value storage section;
Fig. 12 shows a block diagram showing a relationship between the load sensor ECUs and a host ECU;
Fig. 13 shows a block diagram showing a relationship between the load sensor ECUs and the host ECU, which is alternative to that in Fig. 12;
Fig. 14 shows a block diagram showing a relationship between load sensor ECUs and a host ECU in a sensor-equipped wheel support bearing system according to one embodiment of the present invention, which is alternative to those in Figs. 12 and 13;
Fig. 15 illustrates definition of load directions in a vehicle;
Fig. 16 shows a diagram including an Fz low applied load state in an Fy-Fz plane; and
Fig. 17 shows a block diagram showing a relationship between load sensor ECUs and a host ECU of a conventional example.

### DESCRIPTION OF EMBODIMENTS

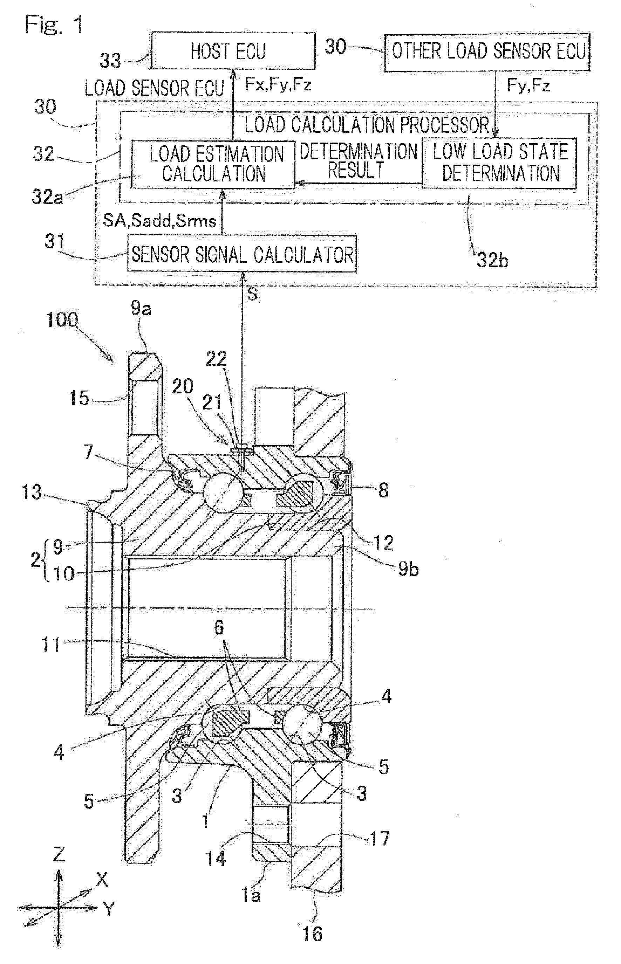

A sensor-equipped wheel support bearing assembly according to a first embodiment of the present invention will be described with reference to Fig. 1 to Fig. 8. The sensor-equipped wheel support bearing assembly is applied to a wheel support bearing segment 100, of a third generation, inner ring rotation type, used for supporting a drive wheel. It is to be noted that hereinafter in this description, terms "outboard" and "inboard" represent one side of a vehicle body away from the longitudinal center of the vehicle body and the other side of the vehicle body close to the longitudinal center of the vehicle body, respectively, when assembled in the vehicle body.

As shown in a cross-sectional view of Fig. 1, the wheel support bearing segment 100 of the sensor-equipped wheel support bearing assembly includes: an outer member 1 having an inner periphery formed with double rows of raceway surfaces 3; an inner member 2 having an outer periphery formed with raceway surfaces 4 opposed to the respective raceway surfaces 3; and a plurality of rows of rolling elements 5 interposed between the raceway surfaces 3 of the outer member 1 and the raceway surfaces 4 of the inner member 2. The wheel support bearing segment 100 is implemented as a double row angular contact ball bearing, in which the rolling elements 5 are in the form of rows of balls, with each row of balls being retained by a retainer 6. The raceway surfaces 3, 4 have arcuate cross-sectional shapes and are formed so as to have respective ball contact angles held in back-to-back relation with each other. A bearing space delimited between the outer and inner members 1, 2 has its opposite open ends sealed by respective sealing members 7, 8.

The outer member 1 serves as a stationary member, and is of one piece construction having, on an outer periphery, a flange 1a to be fitted to a vehicle body. The flange 1a is mounted to a knuckle 16 forming a part of a vehicle suspension system (not shown) of the vehicle body. The flange 1a has threaded holes 14 for attachment to the knuckle, in a plurality of portions in the circumferential direction, and knuckle bolts (not shown) are inserted into corresponding bolt insertion holes 17 of the knuckle 16 on the inboard side and threaded into the threaded holes 14, thereby to mount, to the knuckle 16, the flange 1a for attachment to the vehicle body.

The inner member 2 serves as a rotational member, and includes: a hub unit 9 having a wheel mounting hub flange 9a; and an inner ring segment 10 mounted on an outer periphery of an inboard side end of an axle portion 9b of the hub unit 9. The hub unit 9 and the inner ring segment 10 are formed with the respective rows of the raceway surfaces 4. The hub unit 9 has an inboard end, an outer periphery of which is stepped to form a reduced diameter surface that defines an inner ring fitting surface 12, to which the inner ring segment 10 is fitted. The hub unit 9 has a center formed therein with a through bore 11. The hub flange 9a has press fitting holes 15 for receiving hub bolts (not shown) in a plurality of portions in the circumferential direction. The hub unit 9 has a cylindrical pilot portion 13 for guiding a wheel and a brake component (both not shown) protrudes toward the outboard side, in the vicinity of the root portion of the hub flange 9a of the hub unit 9.

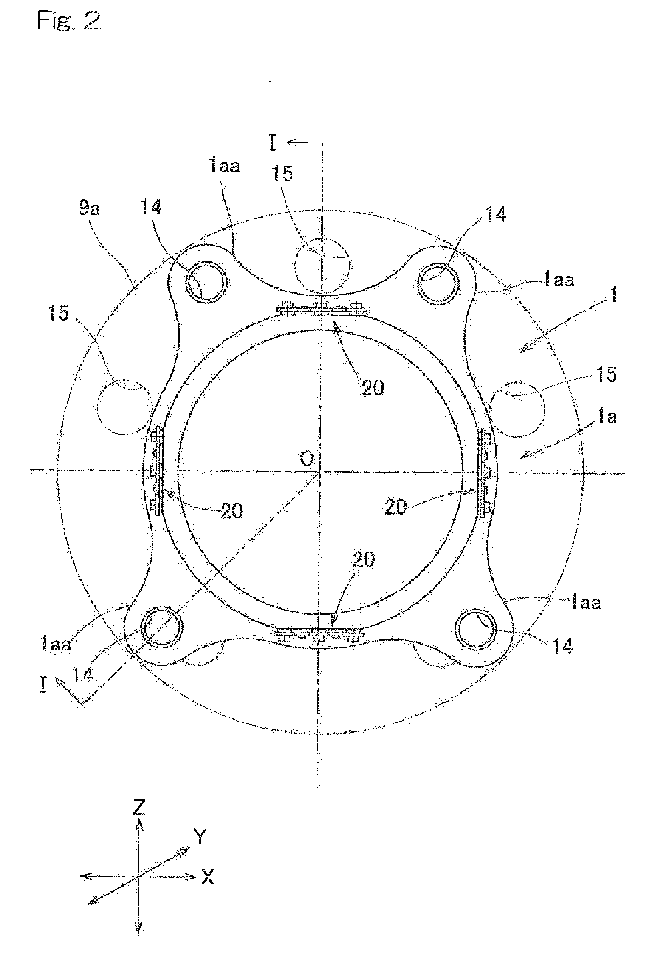

Fig. 2 shows a front elevational view of the outer member 1 of the wheel support bearing segment 100, as viewed from the outboard side. It is to be noted that the cross section of the wheel support bearing assembly of Fig. 1 is taken along the line I-I in Fig. 2. As shown in Fig. 2, the flange 1a to be fitted to the vehicle body includes protruding pieces 1aa each of which is so shaped that the circumferential portion thereof, where the internally threaded hole 14 is defined and protrudes radially outwardly beyond the remaining portion of the vehicle body fitting flange 1a.

The outer member 1 serving as the stationary member has an outer diameter surface provided with four sensor units 20 serving as load detecting sensors. In this description, these sensor units 20 are disposed on an upper surface area, a lower surface area, a right surface area, and a left surface area which are located, on the outer diameter surface of the outer member 1 so as to correspond to upper-lower positions and front-rear positions relative to a tire contact surface. Each of the sensor units 20 is not limited to one which directly detects a load applied to the bearing, but may include one which is able to sense a physical amount from which a load can be detected, such as strain on the bearing.

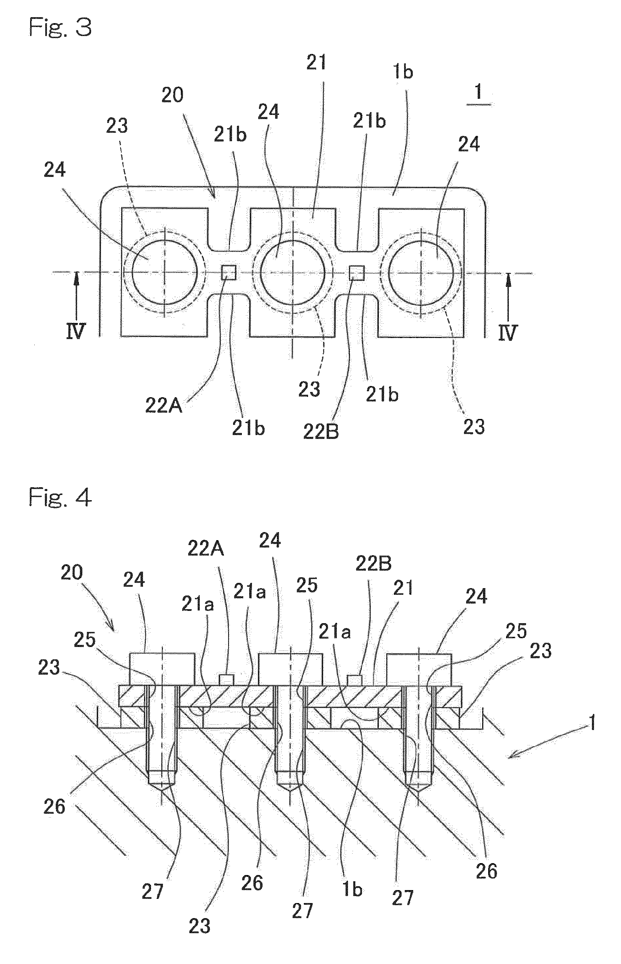

As shown as a specific example in Fig. 4, each of the sensor units 20 includes: a strain generation member 21 fixed to the outer member 1 at contact fixing portions 21a; and strain detection elements 22 (22A, 22B) which are mounted to the strain generation member 21 for detecting a strain occurring in the strain generation member 21. The strain detection elements 22 may include a strain sensor. Fig. 3 shows a plan view of the sensor unit 20. In the configuration example shown in Fig. 4, the two strain detection elements 22 (22A, 22B) are applied to the sensor unit 20. However, one strain detection element 22 may be applied to one sensor unit 20.

Each of the sensor units 20 which serves as a sensor for load detection is not limited to one as shown in Fig. 2 to Fig. 4. For example, a displacement sensor (an eddy-current sensor, a magnetic sensor, a reluctance sensor, or the like) may be mounted to the stationary member which is either the outer member 1 or the inner member 2, and a target to be detected may be disposed in the rotational member. A relative displacement between the outer member 1 and the inner member 2 may be calculated, and the load acting on the wheel may be calculated based on a previously obtained relationship between a load and the displacement. As such, each sensor unit 20 may include such a load sensor that directly or indirectly detects a load acting on the outer member 1 at the position where the sensor unit 20 is provided.

The strain detection element(s) 22 of each of the sensor units 20 is connected to a corresponding load sensor ECU 30 shown in a block diagram in Fig. 1. The load sensor ECU 30 includes: a sensor signal calculator 31 which processes sensor signals S outputted from the sensor units 20, to generate a signal vector; and a load calculation processor 32 which calculates a load applied to the wheel based on the signal vector generated by the sensor signal calculator 31.

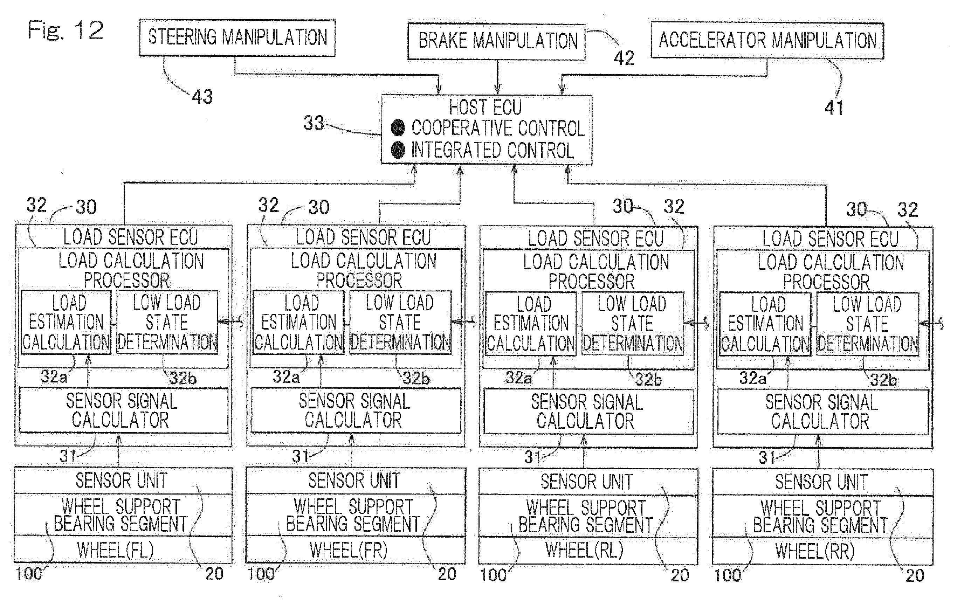

As shown in Fig. 12, the load sensor ECUs 30 are a specific electric control unit which is provided for the respective wheels of a four-wheeled vehicle. In other words, each one of load sensor ECU is provided respectively for each of the wheel support bearings 100. Each load sensor ECU is configured to process an output signal from the corresponding sensor unit(s) 20 and calculate a load. The load sensor ECUs are connected to a host ECU 33. The load sensor ECU 30 may be mounted on a circuit board (not shown) attached to the wheel support bearing segment 100. Alternatively, the load sensor ECU 30 may be mounted in the vicinity of the host ECU 33, which serves as a main ECU in the vehicle body. The host ECU 33 is configured to perform cooperative control and integrated control of the entire vehicle. The host ECU 33 receives signals from units such as an accelerator manipulation unit 41, a brake manipulation unit 42, and a steering manipulation unit 43.

The sensor units 20 need not necessarily be provided to all the wheels, but may be provided to, for example, on the two front wheels.

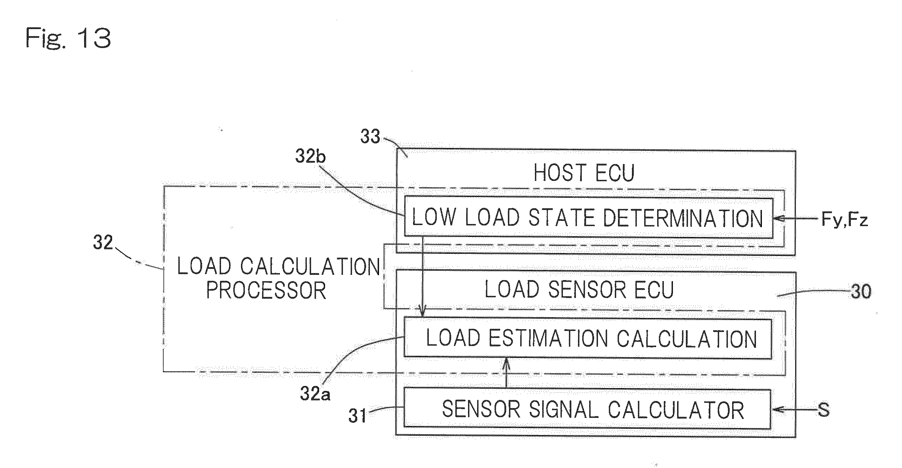

The load sensor ECUs 30 are provided separately from the host ECU 33 and connected to the host ECU 33 in this example, but may be provided as a part of the functions of the host ECU 33. Alternatively, the load sensor ECU 30 may be provided with only the sensor signal calculator 31, among the sensor signal calculator 31 and the load calculation processor 32 while the load calculation processor 32 may be provided in the host ECU 33 as shown in Fig. 13. In particular, the load sensor ECU 30 may be provided with only the sensor signal calculator 31 and a later-described load estimation calculation section 32a, among the load estimation calculation section 32a and a later-described low load state determination section 32b which constitute the load calculation processor 32 while the low load state determination section 32b may be provided in the host ECU 33.

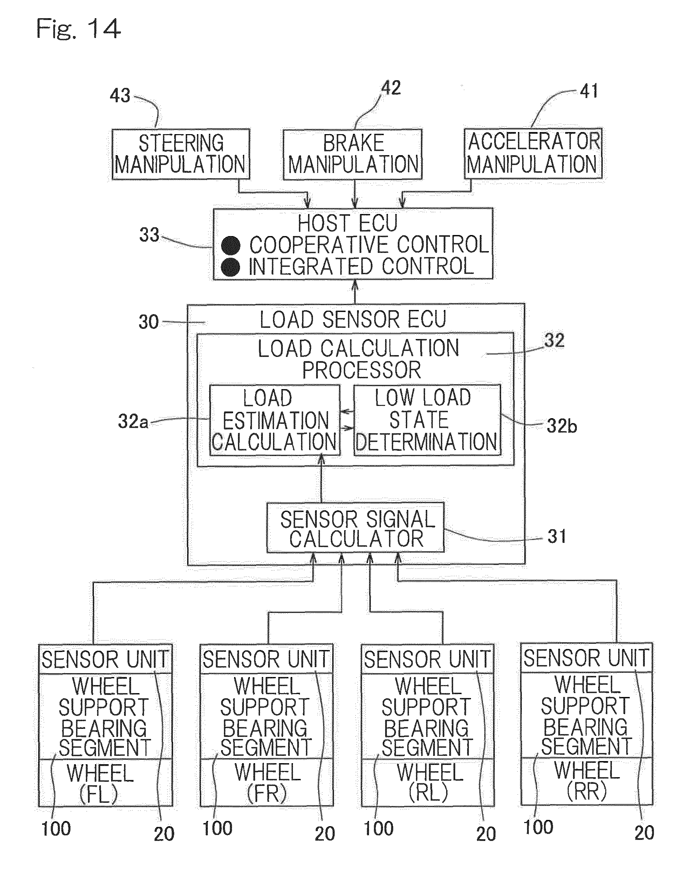

Also, as shown in Fig. 14, only one load sensor ECU 30 may be provided for a single vehicle, instead of each one of the load sensor ECUs 30 being provided respectively for each of the wheels as described above. The one sensor signal calculator 31 and the one load calculation processor 32 may be configured to process an output signal from the sensor unit(s) 20 for each wheel to calculate a load applied to the corresponding wheel.

The reference characters FL, FR, RL, and RR in the drawings denote a front left wheel, a front right wheel, a rear left wheel, and a rear right wheel, respectively.

The load sensor ECU 30 in Fig. 1 will be described. In order to calculate the above-described loads Fx, Fy, Fz in the three directions, X, Y, Z directions perpendicular to each other, which are applied to the wheel, or moment loads in the respective directions, a configuration for a calculation process using at least three sets of sensor information (output signals from the sensor units 20) is necessary. Thus, the sensor signal calculator 31 processes sensor signals from a plurality of the sensor units 20 (four sensor units on upper, lower, right and left areas, respectively, in the illustrated example) to generate a signal vector. The load calculation processor 32 executes a load estimation calculation process based on the signal vector, to calculate a loads F (= {Fx, Fy, Fz, ...}) applied in the respective directions.

The sensor signal calculator 31 generates, as the signal vector, information (SA, Sadd, Srms) which has been subjected to a process such as an averaging process or a summing or substraction process, so that the signal vector is supplied to the load estimation calculator 32. The load estimation calculator 32 estimates loads (Fx, Fy, Fz) in the three respective axis directions from the information to output the loads to the host ECU 33 which performs cooperative control and integrated control of the vehicle.

As described above as the problem of the conventional technique, if calculation of the estimation of the loads by the load estimation calculator 32 is performed on the basis of a certain load calculation scheme regardless of the sensor signal level, under an Fz low applied load state of the wheel, in which the sensor signal level decreases, it is difficult to separate the ground contact load Fz and the axial load Fy, and thus, the accuracy of load estimation deteriorates. On the contrary, in this embodiment, the load estimation calculator 32 includes the low load state determination section 32b in addition to the load estimation calculation section 32a. The low load state determination section 32b is configured not only to perform the above-described calculation of the estimation of loads in the three axis directions, but also to switch the load calculation scheme which is executed by the load estimation calculation section 32a, in accordance with a result of determination performed by the low load state determination section 32b.

In the case where the low load state determination section 32b is provided for each wheel as in the example of Fig. 12, the low load state determination section 32b determines whether a corresponding target wheel is in a predetermined low load state, by using information of calculated loads for at least one or more wheels of the same vehicle other than the target wheel. The information of the calculated loads for the wheels other than the target wheel is acquired from the load estimation calculation sections 32a of the load calculation processor 32 which is provided to the wheels other than the target wheel. The acquired information of the detected loads includes a value of the ground contact load Fz or a value of the axial load Fy, or both of them. Communication between a plurality of the load sensor ECUs 30 is performed via an in-vehicle LAN in the case where the load sensor ECUs 30 are away from each other. Alternatively, if the load sensor ECUs 30 are provided on the same wiring board, the communication is performed via a conductor of a wiring board. As described above, in the load sensor ECU 30 for each wheel, the low load state determination section 32b uses the calculated loads from the load estimation calculation sections 32a of the load sensor ECU(s) 30 for the other wheel(s), as a evaluation value, to determine whether the wheel in the low load state.

In the case where the low load state determination section 32b is configured to determine low load states for all sensor-equipped wheel support bearing assemblies of the vehicle as shown in Fig. 14, not for only the one target wheel, the low load state determination section 32b determines whether at least one wheel is in the low load state, based on information of calculated loads such as the ground contact loads Fz on all wheels calculated by the load estimation calculation section 32a to output information regarding the determination to the load estimation calculation section 32a.

In any of the configurations in Fig. 12 to Fig. 14, the load estimation calculation section 32a selects whether to calculate the ground contact load Fz by a normal calculation scheme or by a calculation scheme for the low load state of the ground contact load Fz, depending on the inputted calculated loads. The low load state determination section 32b and the load estimation calculation section 32a perform the determination and the load calculation, respectively, for each of inputs of new sensor signals S inputted one after another. The load estimation calculation section 32a may use the calculation scheme for the low load state only while the low load state determination section 32b determines that the wheel in in the low load state, and switches to the normal calculation scheme when the wheel in no longer in the low load state.

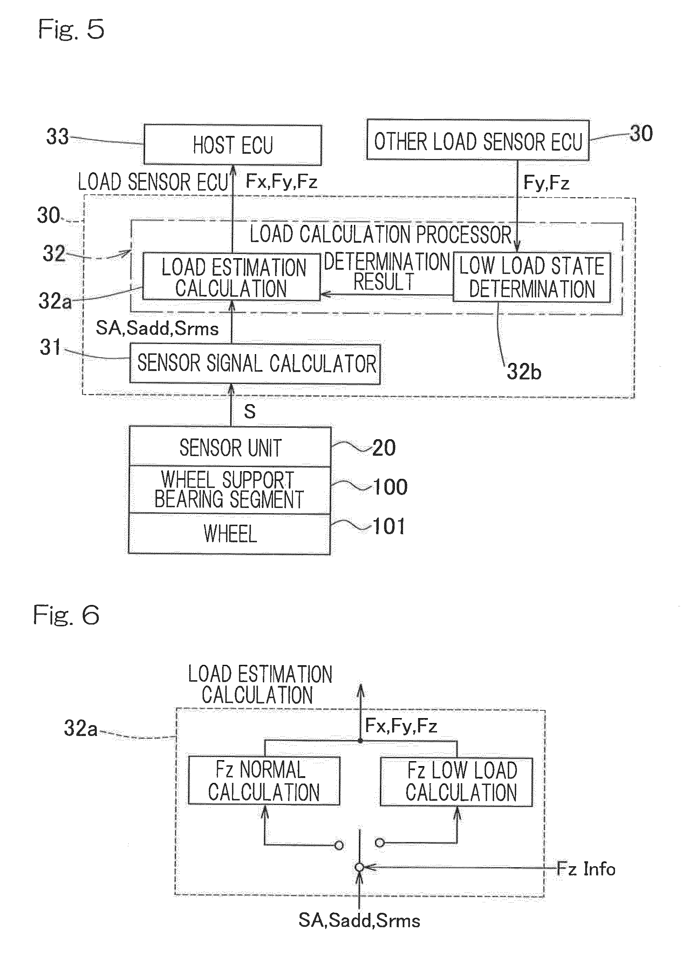

In particular, if it is determined that a wheel is in the Fz low applied load state, the load estimation calculation section 32a for the determined wheel is configured to switch to the calculation scheme suitable for the Fz low applied load state to calculate three-axis loads (Fx, Fy, Fz), as shown in Fig. 6.

The load estimation calculation section 32a performs any of the following switching.
(1) Switch a load estimation coefficient to one suited for the characteristics of the Fz low applied load state.
(2) Switch a load calculation scheme to in which the configuration of the sensor signal S is optimized according to the signal level of the bearing.

The low load state determination section 32b determines the Fz low applied load state as follows.

Specific examples of a method of determining the Fz low applied load state are shown below.

### (1) Determination based on the axial load Fy and the ground contact load Fz on an opposite wheel.

The Fz low applied load state is determined by using a load output for a wheel located at the laterally opposite side of the determination target wheel (for example, when the target wheel is the FL wheel, the opposite wheel is the FR wheel).

While the vehicle turns on a flat road surface, the ground contact load Fz is in a low load state in the wheel at an inner side of turning due to rolling of the vehicle, and, conversely, the axial load Fy and the ground contact load Fz are in a high load state in the wheel at an outer side of turning. Thus, a criterion for determining a load state of the wheel at the outer side of turning is set as a threshold, in which the wheel at the inner side of turning is in the Fz low applied load state.

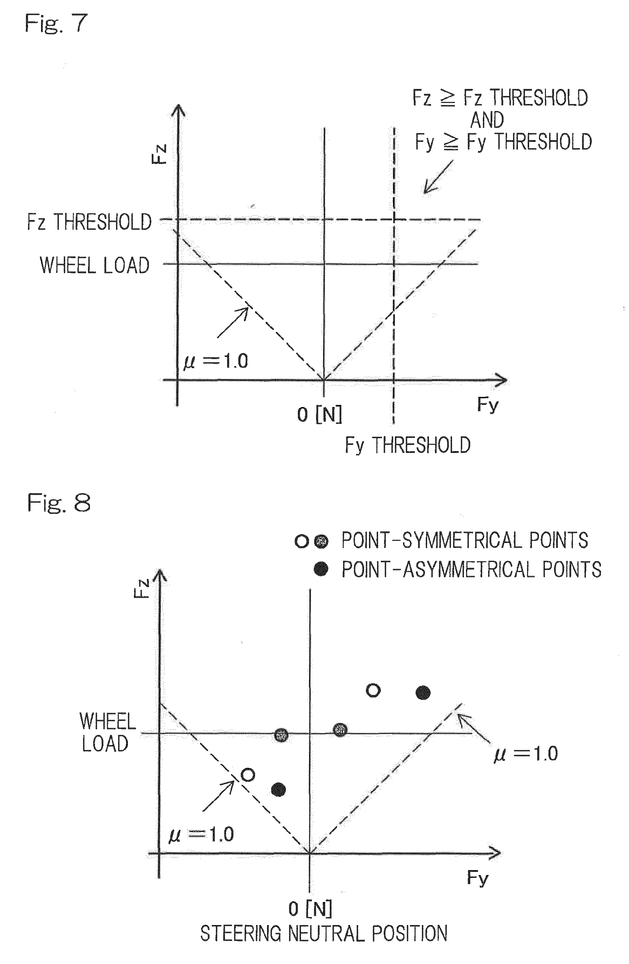

In this case, for example, as shown in Fig. 7, if a load output from an wheel opposite to the target wheel at the outer side of turning exceeds a preset threshold (an Fy threshold and an Fz threshold), it can be determined that the target wheel at the inner side of turning is in the Fz low applied load state. Only either one of the ground contact load Fz and the axial load Fy on the opposite wheel may be compared to the corresponding threshold, or, instead, both of them on the opposite wheel may be compared to the respective thresholds. It is possible to perform more accurate load state determination in the case where both thresholds for the ground contact load Fz and the axial load Fy are used, than in the case of comparison to only one of the thresholds for the ground contact load Fz and the axial load Fy. The thresholds for the loads may be set to respective optimum values according to a result of a running test or the like.

### (2) Determination based on the axial load Fy and the ground contact load Fz on a diagonal wheel.

The Fz low applied load state is determined by using a load output for a wheel at a diagonally opposite position in the vehicle with respect to the determination target wheel (for example, when the target wheel is the FL wheel, the diagonal wheel is the RR wheel).

While the vehicle runs on a flat road surface, if it is assumed that the total weight of the vehicle does not change during running, the ground contact loads Fz on the diagonal wheels are not applied in the same direction at the same time. Similarly, because of the structure of the vehicle, the axial loads Fy on the diagonal wheels are not applied in the same direction at the same time (Please note that regarding the direction of the axial load Fy, a direction toward the center side in the width direction of the vehicle is a positive direction as shown in Fig. 15). In addition, similarly to the case for the opposite wheel shown in the above (1), while the vehicle is turning, the ground contact load Fz is in a low load state in the wheel at the inner side of turning, and conversely, the axial load Fy and the ground contact load Fz are in a high load state in the wheel at the outer side of turning.

Therefore, similarly to (1) and the technique shown in Fig. 7 using information of the opposite wheel, when the load output for the diagonal wheel at the inner side of turning exceeds the preset threshold, it is determined that the target wheel is in the Fz low applied load state, whereby it is possible to recognize that the ground contact load Fz is not in a normal load state.

### (3) Determination based on the axial loads Fy and the ground contact loads Fz on the opposite wheel and the diagonal wheel.

The Fz low applied load state may be determined by a combination of the methods shown in the above (1) and (2), that is, by using a combination of the load outputs for the opposite wheel and the diagonal wheel with respect to the determination target wheel. In this case, the threshold can be set more freely, so that and false determination is much less likely occurs. Thus, state determination with higher accuracy is enabled than in the case of determination by using information based on only one wheel.

### (4) Determination based on the axial loads Fy and the ground contact loads Fz on the diagonal wheel and the determination target wheel.

The Fz low applied load state is determined by using a relative relationship between load outputs for the determination target wheel and the wheel at the diagonally opposite position in the vehicle. As described in the above (2), while the vehicle runs on a flat road surface, each of the axial load Fy and the ground contact load Fz is not applied to the two wheels, the determination target wheel and the diagonal wheel, in the same direction at the same time (the definition of the direction is as shown in Fig. 15).

Therefore, as shown in Fig. 8, when points represented by the ground contact loads Fz and the axial loads Fy acting on the determination target wheel and the diagonal wheel during running are drawn on an Fy-Fz plane, two points are located at point-symmetrical positions with respect to a point (hereinafter, an origin) at which the axial road Fy is equal to a load at a steering neutral position (Fy = 0 [N]) and the ground contact load Fz is equal to a wheel load. In the case of the bearing that is in the Fz low applied load state, there is the possibility that an error of a detected estimation load value increases, and in such a case, these two points deviate from the point-symmetrical positions. Thus, the low load state determination section 32b is configured to compare points specified by the ground contact loads Fz and the axial loads Fy on the two wheels, and to determine that the Fz load is in a low load state when the two points are not point-symmetrical, whereby it is possible to detect the Fz low applied load state. As a criterion for determining whether the two points are point-symmetrical, an optimum range may be obtained from data of a running test or the like.

In particular, the low load state determination section 32b is configured to determine that a wheel having a ground contact load Fz lower than the wheel load is in a low load state, when, on the Fy-Fz plane indicating the axial load Fy and the ground contact load Fz, two points on the plane for two diagonal wheels deviate from point-symmetrical positions by a given amount with respect to an origin. The origin is set to the position at which the axial load is equal to the load at the steering neutral position and the ground contact load is equal to the wheel load. According to this configuration, the determination of the low load state can be performed further accurately.

### (5) Use of brake ON/OFF information

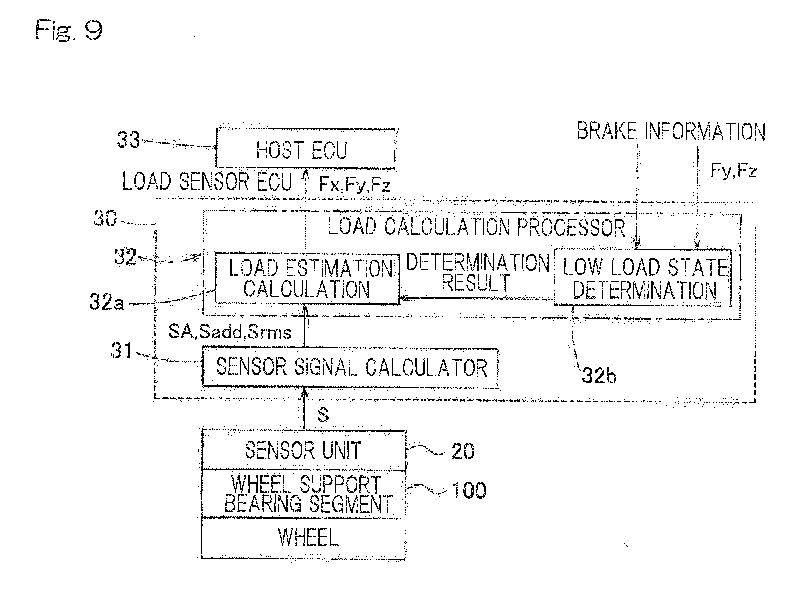

When a brake is actuated in the vehicle, influence of a braking force is superposed on the sensor signal S, and thus the characteristics of the load distribution on the Fy-Fz plane can change. Thus, as shown in Fig. 9, ON/OFF information of a brake signal (brake information) may be added to the determination criterion. According to the brake information, a threshold can be set, and thus accurate load determination can be performed.

The brake ON/OFF information may be acquired from the host ECU 33 or the like via communication means. Alternatively, as the brake ON/OFF information, information estimated by the load estimation calculation section 32a may be used. In order for the load estimation calculation section 32a to estimate ON/OFF of the brake, the load Fx in the front-rear direction which is calculated in the load estimation calculation section 32a is compared to a preset threshold, and the state of the brake is determined on the basis of a result of the comparison. The load estimation calculation section 32a may previously perform a load calculation process for both cases of ON and OFF of the brake, may determine whether a braking state has occurred, by using an obtained value of the load Fx in the front-rear direction (either one or both of values for ON of the brake and OFF of the brake), may select an appropriate calculation result, and may output the selected result. In the case of determination using both values, a combination of both values is used, and thus an effect of improving the accuracy of the determination is obtained. With such a configuration, even in a situation where brake information is not provided from the vehicle, it is possible to determine the state of the braking and calculate an accurate load estimation value.

### (6) Introduction of a compensation processing section

If the mounting angles (toe angles) of the front and rear wheels are different from each other, Fy load values at the steering neutral position for the diagonal wheels may be different from each other. In this case, the technique of comparing two wheels as in the above (2) cannot handle the wheels equivalently. In addition, influence of a difference between the geometries of suspensions or the like at the front and rear wheels on the load outputs cannot also be neglected.

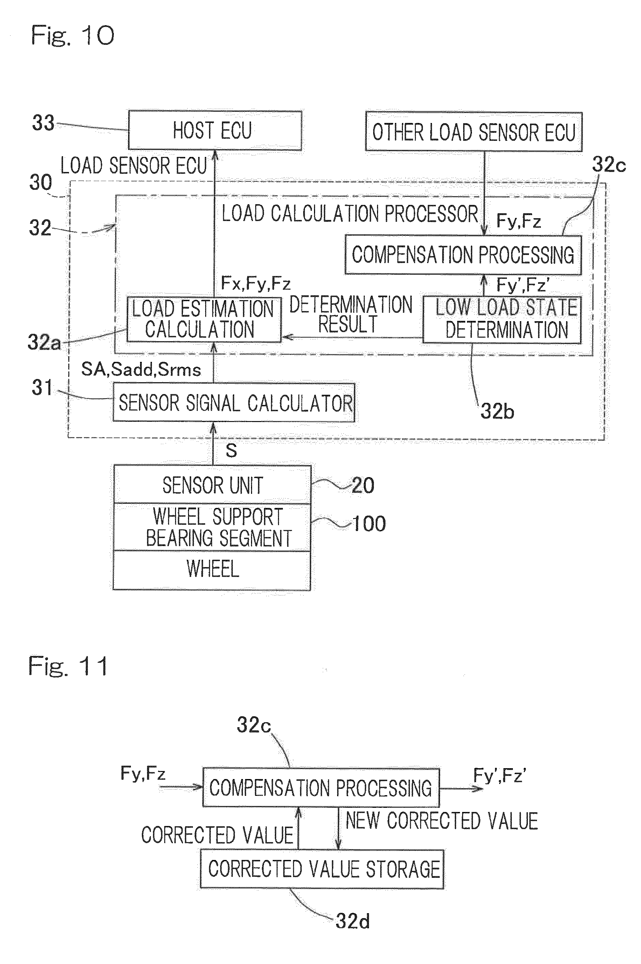

Thus, as shown in Fig. 10, the load sensor ECU 30 may include a compensation processing section 32c for canceling an environmental difference between the wheels to stably calculate a load value. Even if the surrounding environments of the wheels are different from each other, the environments can be considered as being equivalent through a compensation process, and thus load determination can be performed with higher accuracy. In addition, it is possible to handle various conditions without using special hardware or the like for alleviating an environmental difference between the wheels, thus the cost is reduced, and the convenience also improves.

As shown in Fig. 11, the compensation processing section 32c may be provided with a corrected value storage section 32d which stores values such as a wheel load (a load due to a wheel) which are used for a process. The corrected value storage section 32d may be configured to be able to store therein a wheel load acting on only the vehicle body which is a default value for a wheel load, as well as wheel loads under a plurality of running conditions such as the time when the vehicle is stopped, the time when the vehicle runs at a low speed, and the time when the vehicle accelerates at a neutral steering angle. By so doing, the compensation processing section 32c can switch a wheel load as a reference according to a running state of the vehicle which is determined from a load input (inputted from the load estimation calculation section 32a), to cancel influence of arrangement of occupants or luggage, a difference in tire, or the like. Thus, it is possible to comparably handle the respective wheels. The corrected value storage section 32d may be configured as, for example, a nonvolatile memory (EEPROM) provided on a board (not shown) of the load sensor ECU 30.

In the sensor-equipped wheel support bearing assembly of this embodiment, at the wheel support bearing segment 100 provided with the sensor unit(s) 20 for load detection, whether the ground contact load Fz on each wheel is in a low load state may be determined from load states or the like of a plurality of the wheels. In particular, estimation loads detected at wheels are inputted to the low load state determination section 32b, and whether a specific wheel is in the Fz low applied load state may be estimated based on a plurality of the obtained estimation loads. For the wheel that is estimated to be in the Fz low applied load state, scheme of calculating a load is switched to one that is suitable for the low load state, so that an estimation load with a smaller error can be calculated.

In the case where the scheme of calculating a load is switched to the calculation process suitable for the low load state by switching the load estimation coefficient, load calculation using a load estimation coefficient optimized according to the characteristics of the low load state is enabled, and thus the accuracy of load estimation improves.

In the case of switching to, as a calculation process in the low load state, a load calculation scheme in which a configuration such as the number of or the type of sensor signals to be inputted is optimized, an optimum load estimation calculation process for the Fz low applied load state is performed, and thus the accuracy of load estimation improves.

The advantageous effects achieved by the configuration of the above embodiment will be summarized below.
- Since load outputs for a plurality of wheels may be used as a criterion for determining the Fz low applied load, it is possible to determine a state of a wheel whose Fz load is very low or a wheel that is on the point of being lifted off, and thus, also for such a wheel, it is possible to perform the load estimation process with high accuracy.
- By using only the output from the conventional load sensor ECU, it is possible to determine the Fz low applied load state of a wheel as describe above. Therefore, the accuracy of estimation can be improved without providing with an additional sensor for detecting the Fz low applied load state or for detecting a load with high sensitivity even in such a load state. As a result, it is possible to achieve accuracy improvement without increasing the manufacturing cost.
- Since the brake ON/OFF information may be taken into account for the low load state determination, it is possible to remove influence of a braking force from the load, and thus more accurate state determination is enabled.
- Since the low load state determination section 32b may be configured to be provided with the compensation processing section 32c which compensates a difference in mounting angle (toe angle) or suspension shape between the front and rear wheels; and the corrected value storage section 32d which stores a parameter to be used for compensation, it is possible to comparably compare the wheels.
- Since the load calculation scheme is switched when it is determined that the determination target wheel is in the Fz low applied load state, a load can be estimated in response to the characteristics of the Fz low applied load state.

### [Reference Numerals]

- 1: outer member
- 2: inner member
- 3, 4: raceway surface
- 5: rolling element
- 20: sensor unit
- 31: sensor signal calculator
- 32: load calculation processor
- 32a: load estimation calculation section
- 32b: low load state determination section
- 100: wheel support bearing

## Claims

1. A sensor-equipped wheel support bearing assembly comprising:
a wheel support bearing segment for rotatably supporting a vehicle wheel relative to a vehicle body structure, the bearing segment including: an outer member having an inner periphery formed with a plurality of rows of raceway surfaces; an inner member having an outer periphery formed with raceway surfaces that faces the respective raceway surfaces in the outer member; and a plurality of rows of rolling elements interposed between the facing raceway surfaces of the respective outer and inner members;
a plurality of sensor units provided in the wheel support bearing segment, each sensor unit being configured to detect a load applied to the wheel support bearing segment;
a sensor signal calculator configured to process output signals from the plurality of sensor units to generate an input signal vector; and
a load calculation processor configured to calculate a load applied to a road surface contact point on the wheel supported by the wheel support bearing segment, on the basis of the input signal vector generated by the sensor signal calculator, wherein
the load calculation processor includes: a low load state determination section configured to determine whether a target wheel which is the wheel supported by the wheel support bearing segment is in a predetermined low load state, based on information of a calculated load acting on at least one or more wheels which is provided in the same vehicle as the target wheel, but other than the target wheel; and a load estimation calculation section configured to switch a load calculation scheme in accordance with a result of the determination by the low load state determination section to calculate the load applied to the road surface contact point on the wheel, based on the input signal vector.

2. The sensor-equipped wheel support bearing assembly as claimed in claim 1, wherein the determination as to the predetermined low load state by the low load state determination section is performed on the basis of a determination as to whether a ground contact load Fz applied to the target wheel is within a predetermined low load state region.

3. The sensor-equipped wheel support bearing assembly as claimed in claim 1 or 2, wherein the low load state determination section is provided in a load sensor ECU including an electric control unit.

4. The sensor-equipped wheel support bearing assembly as claimed in claim 1 or 2, wherein the low load state determination section is provided in a host ECU including an electric control unit serving as a host with respect to a load sensor ECU including an electric control unit and configured to transmit the result of the determination to the load sensor ECU.

5. The sensor-equipped wheel support bearing assembly as claimed in any one of claims 1 to 4, wherein the switching of the load calculation scheme in accordance with the result of the determination in the load estimation calculation section includes switching of a load estimation coefficient.

6. The sensor-equipped wheel support bearing assembly as claimed in any one of claims 1 to 4, wherein the switching of the load calculation scheme in accordance with the result of the determination in the load estimation calculation section includes switching of a configuration of the input signal vector to be used by the load calculation process.

7. The sensor-equipped wheel support bearing assembly as claimed in any one of claims 1 to 6, wherein the low load state determination section determines whether the target wheel is in the predetermined low load state, by using information of detected loads on a wheel at a laterally opposite side of the vehicle with respect to the target wheel, a wheel at a diagonally opposite position with respect to the target wheel, or both the wheel at the laterally opposite side and the wheel at the diagonally opposite position.

8. The sensor-equipped wheel support bearing assembly as claimed in claim 7, wherein the low load state determination section uses, as an evaluation value for performing the determination, a ground contact load Fz applied to the wheel support bearing segment, an axial load Fy applied to the wheel support bearing segment, or a value which is a combination of the ground contact load Fz and the axial load Fy.

9. The sensor-equipped wheel support bearing assembly as claimed in claim 7, wherein when, on an Fy-Fz plane with Fy and Fz indicating an axial load and a ground contact load, respectively, two points on the plane for the axial loads Fy and the ground contact loads Fz applied to two diagonal wheels deviate from point-symmetrical positions by a given amount with respect to an origin, at which the axial load Fy is equal to a load at a steering neutral position and the ground contact load Fz is equal to a wheel load, the low load state determination section determines that a wheel having a ground contact load Fz lower than the wheel load is in the low load state.

10. The sensor-equipped wheel support bearing assembly as claimed in any one of claims 1 to 6, wherein the low load state determination section switches a threshold serving as a reference for the determination between at ON of a brake and at OFF of the brake based on brake information of the vehicle, and performs the determination as to the predetermined low load state.

11. The sensor-equipped wheel support bearing assembly as claimed in claim 10, wherein the brake information is obtained based on a result of a determination as to ON/OFF by using a result of the calculation by the load estimation calculation section.

12. The sensor-equipped wheel support bearing assembly as claimed in claim 10, wherein the brake information is information acquired from an ECU that performs integrated control of the vehicle.

13. The sensor-equipped wheel support bearing assembly as claimed in any one of claims 1 to 12, wherein the low load state determination section includes a compensation processing section for considering different wheels of the vehicle as being under an equal condition.

14. The sensor-equipped wheel support bearing assembly as claimed in claim 13, wherein the compensation processing section corrects the axial load Fy and the ground contact load Fz on the wheel support bearing segment.

15. The sensor-equipped wheel support bearing assembly as claimed in claim 13, wherein the compensation processing section includes a corrected value storage section configured to store a parameter to be used for performing the compensation.

16. The sensor-equipped wheel support bearing assembly as claimed in claim 13, wherein the compensation processing section compensates a difference in mounting angle of a wheel of the vehicle.

17. The sensor-equipped wheel support bearing assembly as claimed in claim 13, wherein the compensation processing section compensates a difference in geometry of a suspension at wheels of the vehicle.

18. A sensor-equipped wheel support bearing system comprising:
a plurality of wheel support bearing segments;
a plurality of sensor units provided in each of at least two wheel support bearing segments of the plurality of wheel support bearing segments, each sensor unit being configured to detect a load applied to the corresponding wheel support bearing segment;
at least one sensor signal calculator; and
at least one load calculation processor, wherein
each of the plurality of wheel support bearing segments for rotatably supporting a vehicle wheel relative to a vehicle body structure includes: an outer member having an inner periphery formed with a plurality of rows of raceway surfaces; an inner member having an outer periphery formed with raceway surfaces that faces the respective raceway surfaces in the outer member; and a plurality of rows of rolling elements interposed between the facing raceway surfaces of the respective outer and the inner members,
the at least one sensor signal calculator processes output signals from the plurality of sensor units provided in the at least two wheel support bearing segments, to generate input signal vectors, and
the at least one load calculation processor calculates loads applied to road surface contact points on the wheels supported by the respective at least two wheel support bearing segments, based on the input signal vectors, and includes: a low load state determination section configured to, for the target wheel on which the load is calculated, determine whether the target wheel is in a predetermined low load state, based on information of a calculated load acting on a wheel other than the target wheel; and a load estimation calculation section configured to switch a load calculation scheme in accordance with a result of the determination by the low load state determination section to calculate the load applied to the road surface contact point on the wheel, based on the input signal vector.

19. The sensor-equipped wheel support bearing system as claimed in claim 18, wherein the determination as to the predetermined low load state by the low load state determination section is performed on the basis of a determination as to whether a ground contact load Fz applied to the target wheel is within a predetermined low load state region.

20. The sensor-equipped wheel support bearing system as claimed in claim 18 or 19, wherein the switching of the load calculation scheme in accordance with the result of the determination in the load estimation calculation section includes switching of a load estimation coefficient.

21. The sensor-equipped wheel support bearing system as claimed in any one of claims 18 to 20, wherein the switching of the load calculation scheme in accordance with the result of the determination in the load estimation calculation section includes switching of a configuration of the input signal vector to be used for the load calculation process.

22. The sensor-equipped wheel support bearing system as claimed in any one of claims 18 to 21, wherein the low load state determination section determines whether the target wheel is in the predetermined low load state, by using information of detected loads on a wheel at a laterally opposite side of the vehicle with respect to the target wheel, a wheel at a diagonally opposite position with respect to the target wheel, or both the wheel at the laterally opposite side and the wheel at the diagonally opposite position.

23. The sensor-equipped wheel support bearing system as claimed in claim 22, wherein the low load state determination section uses, as an evaluation value for performing the determination, a ground contact load Fz applied to the wheel support bearing, an axial load Fy applied to the wheel support bearing, or a value which is a combination of the ground contact load Fz and the axial load Fy.

24. The sensor-equipped wheel support bearing system as claimed in claim 22, wherein when, on an Fy-Fz plane with Fy and Fz indicating an axial load and a ground contact load, respectively, two points on the plane for the axial loads Fy and the ground contact loads Fz applied to two diagonal wheels deviate from point-symmetrical positions by a given amount with respect to an origin, at which the axial load Fy is equal to a load at a steering neutral position and the ground contact load Fz is equal to a wheel load, the low load state determination section determines that a wheel having a ground contact load Fz lower than the wheel load is in the low load state.
